# EUROPEAN PATENT SPECIFICATION

(11) **EP 4 045 464 B1**
(45) Date of publication and mention of the grant of the patent: **04.09.2024**
(21) Application number: 20876808.5
(22) Date of filing: 12.10.2020
(51) Int. Cl.: C02F 1/465, C02F 1/461

(54) **APPARATUS FOR PURIFYING WATER**
WASSERREINIGUNGSVORRICHTUNG
APPAREIL DE PURIFICATION D'EAU

(30) Priority: 14.10.2019 FI 20190073
(43) Date of publication of application: 24.08.2022
(73) Proprietor: Elwater Ltd OY, 33720 Tampere (FI)
(72) Inventor: KAIPIAINEN, Markku, 36240 Kangasala (FI); KLEMOLA, Martti, 33720 Tampere (FI)
(74) Representative: Berggren Oy
(86) International application number: PCT/FI2020/050670
(87) International publication number: WO 2021/074488

(56) References cited:
- JP-A- 2003 024 945
- JP-A- 2008 043 891
- KR-B1- 101 061 227
- KR-B1- 101 106 282
- KR-B1- 101 686 865
- US-A1- 2008 264 781
- US-A1- 2016 075 572
- US-A1- 2018 251 388

## Description

### Technical field

The invention is related to water purifiers. The invention is related to water purifiers based on electroflotation. The invention is related to purification of wastewater generated in small real estates, mines, factories or communities.

### Background

Purification of water is important as regards human activity and environmental protection, firstly, to produce drinking water and secondly, to control environmental load. For example, purification of water, such as wastewater, is needed in the industry, such as the paper, mining and chemical industries, and for purification of service waters, such as greywater (various cleaning waters) or blackwater (toilet wastewater) used in communities (e.g., residential areas) or vessels (e.g., ships).

A solution for purification of such waters is based on electroflotation. In electroflotation, the purification of water takes place by means of electric current. Electric current is conveyed to two electrodes: an anode, to which a voltage is applied, and a cathode, to which a voltage negative with respect to said anode is applied, such as ground potential. Water for purification is arranged between said electrodes, thus water to be purified functioning as an electrolyte. A suitable soluble metal electrode is typically used as the anode. Such apparatuses and methods are described in patent publications FI126678 and FI127277, for example.

Wastewater treatment in large quantities requires several purifiers, or it is possible to arrange several separate cylindrical purification channels inside one purifier, as illustrated in the aforementioned publications. However, it has been discovered that such a solution is not fully optimal regarding its use of space and, therefore, its material costs. In addition, supplying electricity into the apparatus typically requires suitable lead-throughs for electric wires, which is difficult in terms of the manufacturing technology, at least if there are several purification channels. Furthermore, regarding the use of space of purification plants, it would be necessary to be able to manufacture a purifier that is small in size but has a high purification capacity.

### Brief summary of the invention

The object of the present invention is to provide a solution for supplying electricity to the inner electrode(s) of the apparatus in such a way that the electrodes are aligned relative to each other. This is achieved with a solution in which the flange of the inner electrode (anode) simultaneously supports the inner electrode and enables supply of electricity from the outside of the outer electrode (cathode). The object of an embodiment is to propose an apparatus with a compact size and reliable operation. This is achieved with a solution in which at least three electrodes are arranged within each other in such a way that at least two flow channels, or gaps, are formed between said three electrodes for water to be purified. Specifically, in such a solution, the precise alignment of the electrodes and supply of electricity would be problematic without the solution proposed now. The invention is set forth more precisely in the independent claim 1. Advantageous embodiments are described in the dependent claims.

### Short description of figures

- Fig. 1a: is a lateral view of an apparatus for purifying water,
- Fig. 1b: is a lateral view of an apparatus for purifying water,
- Fig. 1c: is a sectional view Ic-Ic of Figure 1a, also depicting electrode arrangements of a water purifier,
- Fig. 1d: depicts an anode arrangement, for example, for an embodiment according to Figure 1a,
- Fig. 2a: is a lateral view of an apparatus for purifying water, the apparatus having two nested gaps for purifying water,
- Fig. 2b: is a sectional view IIb-IIb of Figure 2a, also depicting electrode arrangements of a water purifier,
- Fig. 3a: is a lateral view of an apparatus for purifying water, the apparatus having four nested gaps for purifying water,
- Fig. 3b: is a sectional view IIIb-IIIb of Figure 3a, also depicting electrode arrangements of a water purifier,
- Fig. 4a: depicts an apparatus for purifying water, the apparatus having two successive cathode arrangements and corresponding anode arrangements,
- Fig. 4b: depicts an apparatus for purifying water, the apparatus having two successive cathode arrangements and corresponding anode arrangements, and
- Fig. 5: is an exploded view of anode and cathode arrangements of an apparatus.

### Description of the embodiments

In this application, the term "cylindrical shell" means the plane that a line segment forms when passing along a closed curve, the direction of which forms an angle with the longitudinal direction of said line segment in each of its points. The longitudinal direction of a cylindrical shell z means the direction of this line segment. Advantageously, cylindrical shell means the shell of a cylinder with a circular bottom, i.e., the shell of a cylinder. An example of a cylindrical shell, which is simultaneously a shell of a cylinder, is the longitudinal section of a pipe with a circular cross-section. Transverse direction means any direction perpendicular to the longitudinal direction.

In this application, symbols x, y and z mean three different directions perpendicular to each other, of which direction z is the aforementioned longitudinal direction. Advantageously, the aforementioned longitudinal direction z is oriented essentially in the vertical direction during the use of the apparatus. Direction z is oriented essentially in the vertical direction, when said direction z forms an angle of a maximum of 30 degrees with the vertical direction (or such an angle is not formed; i.e., it is zero). Advantageously, said angle is less than 10 degrees or less than 5 degrees.

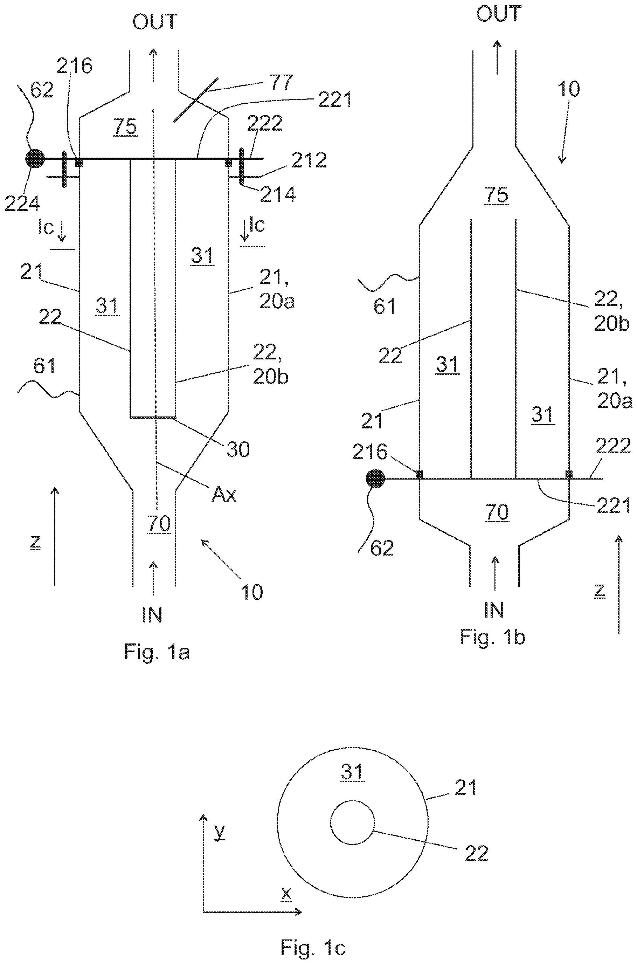

The figures illustrate apparatuses 10 for purifying water. Referring to Figures 1a and 1b, the apparatus 10 includes a cathode arrangement 20a and an anode arrangement 20b. Either one or both of the arrangements can have several electrodes. As will be described below, in an embodiment, the apparatus 10 includes a secondary cathode arrangement 20c, in which case the cathode arrangement 20a can be called a primary cathode arrangement. In addition, in an embodiment, the apparatus includes a secondary anode arrangement 20d, in which case the anode arrangement 20b can be called a primary anode arrangement.

The cathode arrangement 20a includes a first cathode 21. The first cathode has the shape of a cylindrical shell (i.e., hollow); in other words, its cross-section forms a closed curve. The first cathode 21 has the shape of a longitudinal z profile. In an embodiment, the first cathode 21 forms at least a part of the outer casing of the apparatus. In an embodiment, the apparatus 10 additionally includes an outer casing (not shown). The first cathode 21 is made of an electrically conductive material. Electrically conductive material means material whose resistivity is at most 10⁻² Ωm at 20°C.

The anode arrangement 20b includes a first anode 22 having the shape of a bar (solid) or a cylindrical shell (hollow). The longitudinal direction of the first anode 22 is the same as that of the first cathode 21. The first anode 22 is made of an electrically conductive material. The first cathode 21 encircles the first anode 22 in the transverse directions perpendicular to the longitudinal direction z in such a way that a first gap 31 remains in the transverse direction between them 21, 22) for transporting water to be purified. In the arrangement, the first anode 22 is the electrode that wears during use. In addition, the first anode 22 is supplied with voltage that is higher than voltage supplied to the first cathode 21. For example, the first cathode 21 can be supplied with ground potential. Voltages are described in more detail in the aforementioned publications describing prior art. If the apparatus 10 has secondary electrode arrangements (20c, 20d) referred to below, the apparatus also has a secondary gap 51. In such a case, the first gap 31 can be called a first primary gap.

If the innermost electrode of the anode or cathode arrangement (20a, 20b), such as 1a in Figure 22, is hollow, the flow of water through it can be prevented with a plug 30 (Figure 1a). When using the apparatus, all water to be purified is conveyed to the gap 31 or gaps 31, 32, 33, 34 between the electrodes.

The first cathode 21 is the outermost electrode of the apparatus and supplying it with voltage is easy. The cathode 21 can include a screw, for example, or similar for connecting the first electric wire 61. Instead, voltage supply to the first anode 22 is more difficult, particularly if nested anodes or cathodes are more than one. In addition, to avoid uneven wear of anodes, it is important that the width of the gap 31 is constant in the longitudinal direction z.

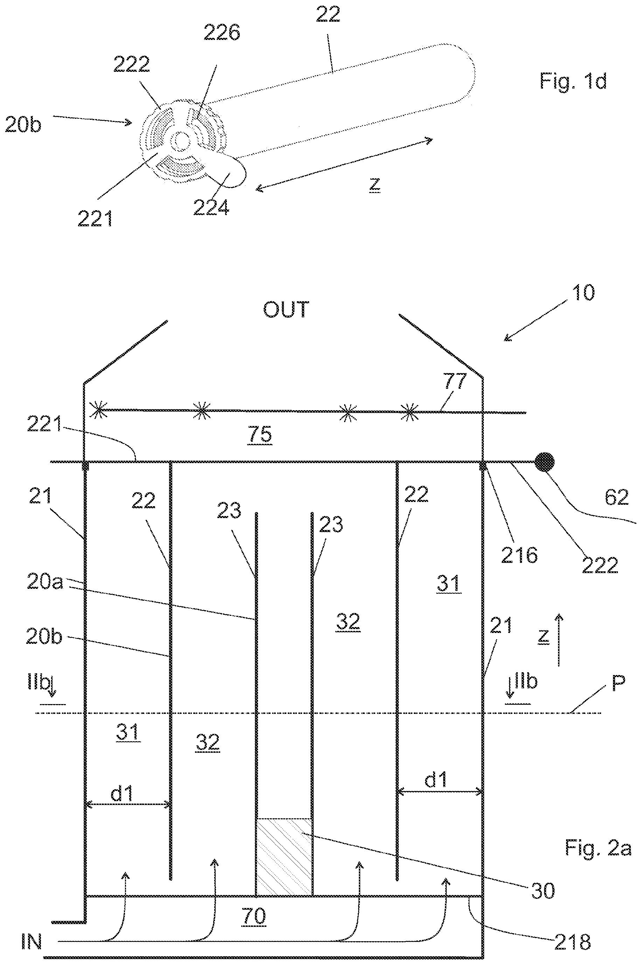

Due to these reasons, the anode arrangement 20b includes a flange 222. The flange 222 is connected to an anode support 221, which is further connected to the first anode 22. The anode arrangement 20b is illustrated in more detail in Figure 1d and depicted as a part of the apparatus 10 in Figures 1a and 1b. The first anode 22 is only able to move relative to the flange 222 within the limits of the material flexibility; that is, almost not at all. The first anode 22 can be welded, for example, to the anode support 221. The anode support 221 and the flange 222 can be parts of one casting of a suitable shape. The first anode 22 is supported to the first cathode 21 in such a way that the flange 222 is mechanically supported to the first cathode 21 in said longitudinal direction z. With such an anode arrangement, particularly because the flange 222 is supported to the first cathode 21, the longitudinal direction of the first cathode 21 is parallel to that of the first anode 22 in the apparatus 10.

The anode arrangement 20b additionally includes a connection point 224 for connecting a second electric wire 62 to the flange 222. In addition, the anode support 221 and the flange 222 include electrically conductive material for supplying electricity from the connection point 224 to the first anode 22. Furthermore, the connection point 224 is at least as far from the longitudinal centre axis Ax of the cathode arrangement 20a as such of point of the first cathode 21 that is closest to said connection point 224. In such a solution, the connection point 224 is on the outer surface, or where the outer surface is composed of a part other than the cathode 21, the connection point is at least as far from the centre axis Ax as the cathode 21. This has the advantage that the second electric wire 62 is easily connectable to the connection point 224. Advantageously, the connection point 224 is at least 5 mm farther away from the longitudinal centre axis Ax of the cathode arrangement 20a than such a point of the first cathode 21 that is closest to said connection point 224. The connection point 224 can include a screw connection, for example, for connecting the second electric wire 62.

In an embodiment, the flange 222 encircles the centre axis Ax. In other words, the flange 222 goes round the entire first anode 22 tangentially, perpendicularly against its longitudinal direction z. Thus, there is a good mechanical support to the first cathode 21. To enable the flow of water in such a case, the anode support 221 delimits the opening 226, as shown in Figure 1d. Water can flow from the opening 226 to the gap 31, as in Figure 1b, or from the gap 31 to the opening 226, as in Figure 1a. Depending on the arrangement, the first anode 22 can extend from the flange 222 in the downstream direction and/or in the upstream direction relative to the flow direction of water to be purified. In terms of the manufacturing technique, it is advantageous that the first anode 22 remains completely on one side of the flange 222 only (downstream or upstream side, as in Figures 1a and 1b, respectively). "IN" appearing in the figures indicates the part of the apparatus 10 to which water for purification is supplied and "OUT" indicates the part from which purified water is taken out.

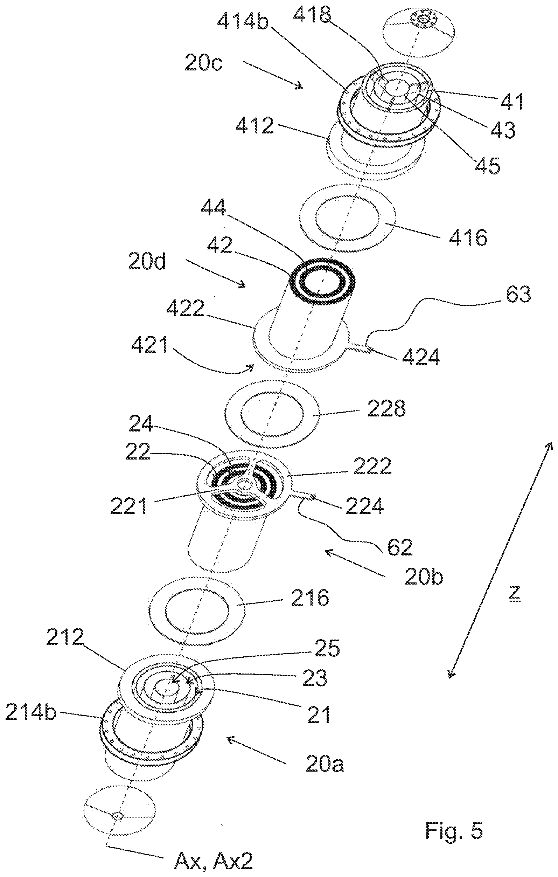

To be able to reliably support the anode arrangement 20b to the first cathode 21, the apparatus 10 includes, in an advantageous embodiment, fastening means 214 for fastening said flange 222 to the first cathode 21. For example, such fastening means 214 may consist of a bolt and a nut and/or a clip, possibly together with a clamping ring 214b (Figure 5). Advantageously, the first cathode 21 includes a projection 212, such as a cathode flange, which extends away from said centre axis AX in said transverse direction, and said fastening means are arranged to fasten said flange 222 to said projection 212. For example, the projection 212 can have a hole for a bolt, a clip can be fastened to the projection, or the projection can be pressed to the flange 222 with the clamping ring 214b. Such a projection 212 (cathode flange) is shown in Figures 1a, 4b and 5, inter alia. This type of fastening can also be used in relation to the other embodiments.

Regarding the operation of the apparatus, it is essential that the cathode arrangement 20a is electrically isolated from the anode arrangement 20b. For this reason, in an embodiment, insulating material 216 is arranged between the flange 222 and the first cathode 21 in said longitudinal direction z. Such insulating material 216 may consist of a ring manufactured from a polymer, such as polyethylene (PE) and/or polypropylene (PP). Advantageously, insulating material 216 is sufficiently hard to ensure stable supporting of the anode arrangement 20b to the cathode 21. Advantageously, hardness of insulating material 216 is at least 65 Sh(A) (i.e., Shore hardness measured on scale A), more preferably at least 75 Sh(A). For example, several polyethylenes (PE) have such hardness. The apparatus can additionally include sealing material, such as silicone, between the flange 222 and the first cathode 21 in the longitudinal direction z.

It has been discovered that the anode arrangement 20b wears during the use of the apparatus - as a consequence of electrochemical reactions - particularly in the connection point between the first anode 22 (and also the second anode 24, if provided) and the anode support 221, unless electrochemical reactions are prevented in these points. Wearing would have the effect that the anode(s) (22, 24) would detach from the anode support 221, and the apparatus would fail. For this reason, in an advantageous embodiment, this kind of electrochemical reactions are prevented in these points. However, they are not prevented relating to the actual anode 22 in order that purification of water is possible. This prevention can be implemented using a suitable watertight and electrically insulating coating, such as paint, lacquer or glue. An example of these are epoxy based coatings. In an advantageous embodiment, in the anode arrangement 20b, at least [A] the anode support 221 and [B] the connection point of the anode support 221 and the first anode 22 are coated with a water-insoluble and electrically insulating coating, such as lacquer, paint or glue. However, the first anode 22 (and any other anodes, such as 24) is/are uncoated for their other parts. The aforementioned connection point 224 is also uncoated for connecting the second electric wire 62. The flange 222 can be coated for its other parts.

In an advantageous embodiment, the anode support 221 and the first anode 22 are made of the same metal. Although the anode support 221 can in some cases be made of a different metal than the first anode 22, it would be very difficult to connect the anode 22 to the anode support 22a, particularly when using aluminium, if the anode support 221 were made of a material other than that of the anode 22. More generally, it is easier to connect similar materials to each other by welding as compared to different materials. Advantageously, the anode support 221 and the first anode 22 are connected to each other by welding.

The first anode 22 is made of an anode material. If the apparatus has two different anode arrangements 20b and 20d, this anode material can be called `primary anode material'. For example, the anode material can be one of the following: aluminium (Al), iron (Fe), magnesium (Mg), carbon (C), chromium (Cr), copper (Cu), manganese (Mn), tin (Sn), lead (Pb) and bismuth (Bi). The first cathode 21 is made of a cathode material. If the apparatus has two different cathode arrangements 20a and 20c, this cathode material can be called `primary cathode material'. For example, the cathode material can be one of the following: steel, acid-proof steel, stainless steel and graphite. Advantageously, the cathode material is more electronegative than the anode material.

In an embodiment, the apparatus 10 additionally includes a power source (not shown) and electric wires 61, 62, 63. The power source is arranged to provide a first voltage, and a first electric wire 61 is arranged to supply the first voltage to the first cathode 21. The first electric wire 61 can be connected to the first cathode 21. The power source is arranged to provide a second voltage, and a second electric wire 62 is arranged to supply the second voltage to the first anode 22. During use, the second electric wire 62 is connected to said flange connection point 224 (Figures 1a and 1b). The second voltage is higher than the first voltage. Voltage magnitudes are described in above mentioned prior art. The apparatus 10 does not necessarily include a power source and electric wires, but these can be sold separately. If the apparatus includes a secondary anode arrangement 20d, the power source is arranged to provide a third voltage and a third electric wire 63 is arranged to supply the third voltage to a first secondary anode 42. The secondary cathode arrangement 20c may have the same potential as the primary cathode arrangement 20a.

In Figure 2a, the width of the first gap 31 is indicated with the symbol d1. The width of the first gap 31 may initially be in the range of 10 mm to 25 mm, for example. During use, the width of the gap increases as the anode 22 wears. A corresponding width applies to the other gaps 32, 33, 34 of the apparatus, if provided. During use, the apparatus is advantageously oriented in such a way that water to be purified flows essentially upwards in said first gap 31 and also in the other gaps 32, 33, 34, if provided.

As described above, water is purified at least in the first gap 31. When processing large amounts of water, several gaps (31, 32, 33, 34) of this kind are needed. It has been discovered now that, regarding the use of space in water purification plants, it is efficient to use such electrode arrangements 20a, 20b that such gaps (31, 32, 33, 34) are also nested within each other. For example, in such a way that the first gap 31 encircles a second gap 32 in the transverse directions perpendicular to said longitudinal direction z. Thus, the first anode 22 remains between said gaps 31, 32. Thus, the first anode 22 wears during use on both of its sides as a consequence of cell reactions.

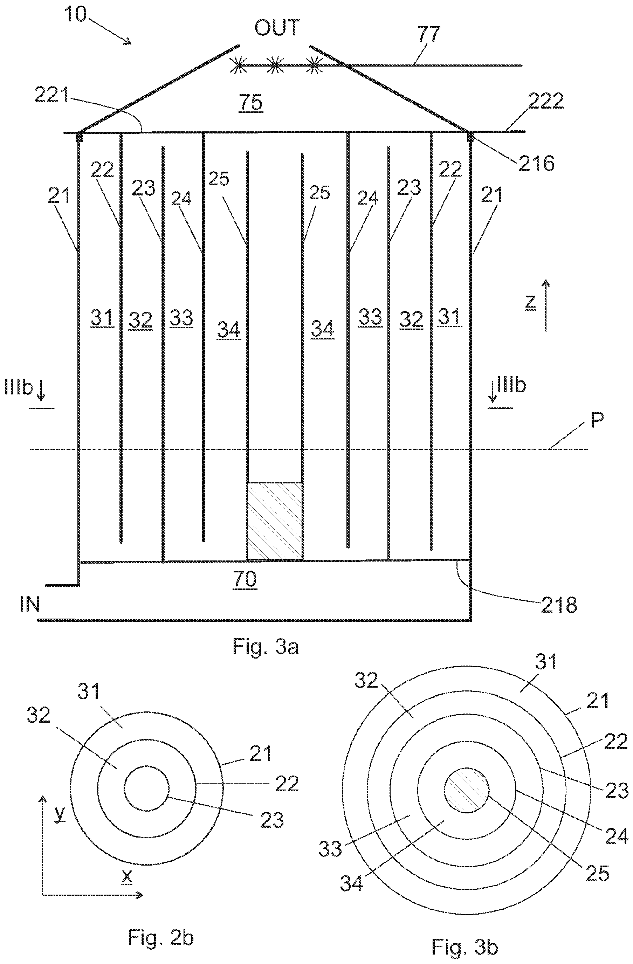

Referring to Figures 2a and 2b, in this embodiment, the first anode 22 has the shape of a cylindrical shell (i.e., hollow) so that said second gap 32 remains within it. In addition, in this embodiment, the cathode arrangement 20a includes a second cathode 23. The second cathode 23 can have the shape of a cylindrical shell (hollow) or a bar (solid). The second cathode 23 has the shape of a profile, the longitudinal direction of which is the same as that of the first cathode 21. The first anode 22 encircles the second cathode electrode 23 in the transverse directions in such a way that a second gap 32 remains between the first anode 22 and the second cathode 23 in the transverse direction for transporting water to be purified (see Figures 2a and 2b). Such an arrangement doubles the purification capacity compared to a solution in which only one gap 31 is used. Advantageously, the first cathode 21 and the second cathode 23 are made of the same material. Cathode materials are listed earlier.

Referring to Figure 2a, in this kind of embodiment, the cathode arrangement includes a cathode support 218, which is arranged to support the second cathode 23 to the first cathode 21 and to conduct electricity between these. If the second cathode 23 is hollow, the support 218 can serve as a plug 30 for preventing the flow of water into the second cathode (at least if a second anode 24 is not used). Alternatively, another plug 30 or a solid (or bar-shaped) cathode can be used. For example, the cathode support 218 may have the shape of a set of bars, the longitudinal direction of which is perpendicular to said longitudinal direction z. For example, the cathode support 218 can have the shape of a plate with holes perforated therein to enable the flow of water. A net can function as the cathode support 218. The cathode support 218 includes electrically conductive material in the way as is described in this application regarding electrical conductivity.

Advantageously, the electrodes (i.e., anodes and cathodes) 21, 22 (optionally also 23, 24, 25) have the shape of a cylindrical shell with a circular bottom. This is advantageous as regards, inter alia, the manufacturing technique of the electrode arrangements 20a and 20b. Electrochemical cell reactions do not require such a shape; nested electrodes with other shapes, for example with polygonal cross-sections, are also possible.

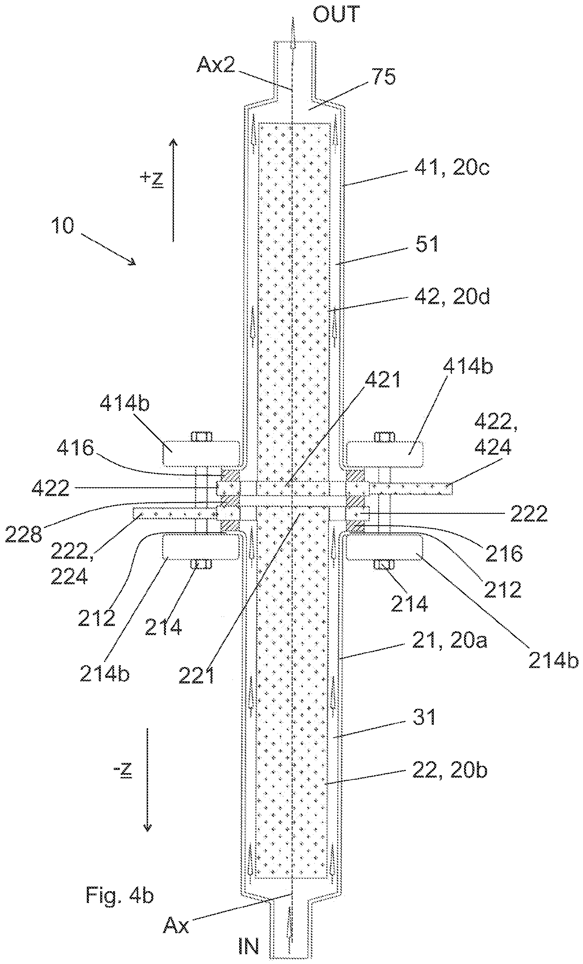

Referring to Figure 2a, this kind of apparatus 10 can additionally include a distribution chamber 70, which is arranged to distribute water for purification to said first gap 31 and said second gap 32. Referring to Figure 2a, in an embodiment, the distribution chamber 70 is arranged to distribute water to the gaps 31, 32 for making the water flow essentially upwards in said gaps 31, 32. Referring to Figure 2b, the apparatus 10 can include a collector chamber 75, which is arranged to receive said water from the first gap 31 and the second gap 32. In an embodiment, the collector chamber 75 is arranged above said electrodes 21, 22, 23. If the apparatus 10 includes secondary anode and cathode arrangements 20c, 20d, the collector chamber 75 can be arranged to receive said water at least from the first secondary gap 51 (see Figure 4b). In an embodiment, the collector chamber 75 is arranged above the secondary anode arrangement 20d. Referring to Figures 1a and 1b, although the apparatus would have only one gap 31, the apparatus can have a corresponding distribution chamber 70 and/or collector chamber 75.

Referring to Figures 3a and 3b, the purification capacity relative to the use of space can be improved by using even more gaps 33 and 34. In one such embodiment, the anode arrangement 20b includes a second anode 24 so that a third gap 33 remains outside the second anode 24. Correspondingly, the second cathode 23 is hollow. To provide even a fourth gap 34 inside the second anode 24, the second anode 24 has the shape of a cylindrical shell (i.e., hollow). In addition, in this embodiment, the cathode arrangement 20a includes a third cathode 25. The third cathode 25 can have the shape of a cylindrical shell (hollow) or a bar (solid). The longitudinal directions of the electrodes (21, 22, 23, 24, 25) are the same. The anode support 221 can be used to provide voltage to the second anode 24. The cathode support 218 can be used to provide voltage to the third cathode 25. The second anode 24 is made of the same anode material as the first anode 22.

In an evident way, it is also possible to use more anodes and/or cathodes, thus forming more nested gaps for purifying water. It is also possible that the apparatus includes a second anode 24 but does not include a third cathode 25, in which case there are only three gaps (31, 32, 33). In practice, the manufacture of cathodes is inexpensive, which is why there is advantageously one more cathode than there are anodes thus obtaining an even number of gaps. In addition, this has the advantage that the anode (e.g., 22 or 24) wears on both of its sides during use, whereupon the gaps (31, 32, 33, 34) will widen less per the amount of water to be purified compared to a case where the anode would only wear on one of its sides. This is advantageous as regards the control of operating voltage. Furthermore, in such a solution, the replacement need of the anode is reduced because it is possible to use thicker anodes initially. More precisely, in an embodiment, the cathode arrangement 20a includes a first number N1 of cathodes (21, 23, 25) penetrating a plane P and the anode arrangement 20b includes a second number N2 of anodes (22, 24) penetrating said plane P. As described above, N1=N2+1, in other words, the first number N1 is one greater than the second number N2. Thus, the number of gaps (31, 32, 33, 34) penetrating the plane P is also even. 'Even' means a multiple of number two.

Cathodes 21, 23, 25 can be made from a pipe with its wall thickness ranging between 0.5 mm and 5 mm, such as 2 mm - 3 mm, such as approximately 2 mm. The thickness can be small, because cathodes do not wear. The length of cathodes can be selected as needed. Most suitably, the length is greater than the diameter. For example, the length can be at least 20 cm, such as 20 cm - 150 cm or 30 cm - 100 cm or 40 cm - 75 cm. The innermost electrode can be bar-shaped (solid). However, it may be more advantageous to use a hollow electrode as the innermost electrode as well, plugged with a plug 30.

Anodes 22, 24 can be made from a pipe with its wall thickness ranging, for example, between 20 mm and 60 mm, such as 30 mm - 50 mm. Compared to the cathode, a large thickness ensures that it is not necessary to replace anode(s) too often. The length of the anode can be similar to the length of the cathode. Referring to Figure 3a, anodes 22, 24 do not extend to the cathode support 218 to avoid short circuiting electrodes. Advantageously, cathodes 21, 23, 25 do not extend to the anode support 221. However, if the aforementioned coating is sufficiently thick, such a coating prevents short circuits of electrodes with the anode support 221.

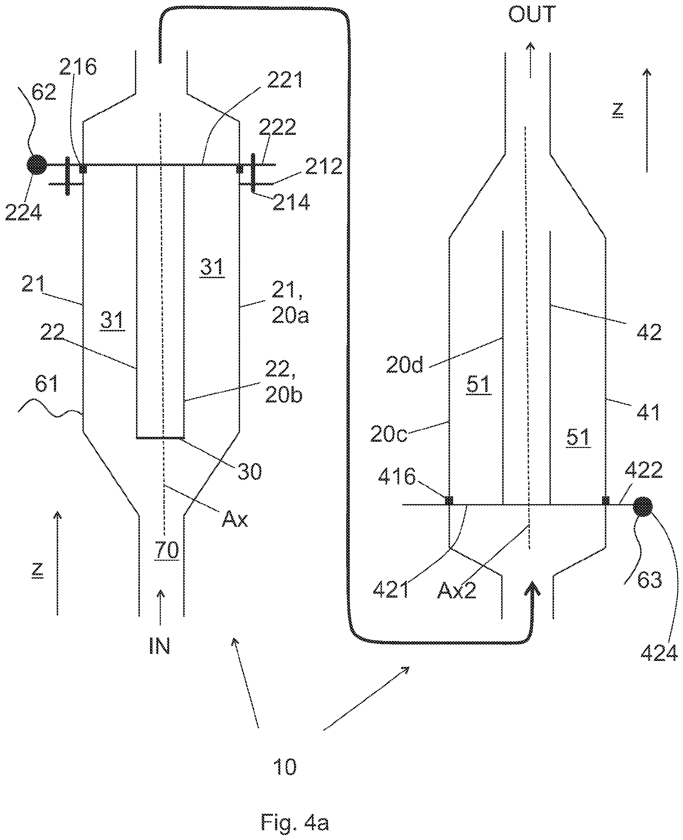

As is known from prior art, water can be purified with successive electrodes made of different materials. For example, water can be purified first with an iron electrode, which functions as the primary anode, and then with aluminium, which functions as the secondary anode. In this case, it is possible to use the two above-described electrode pair arrangements in succession, i.e., in a cascade. The cathode(s) of the latter electrode pair arrangement can be included in the secondary cathode arrangement 20c and the anode(s) can be included in the secondary anode arrangement 20d. Such arrangements are illustrated in Figures 4a, 4b and 5.

In Figure 4a, the apparatus 10 additionally includes a secondary cathode arrangement 20c and a secondary anode arrangement 20d. What is stated above relating to the cathode arrangement 20a also applies to the secondary cathode arrangement 20c *mutatis mutandis.* What is stated above relating to the anode arrangement 20b also applies to the secondary anode arrangement 20d *mutatis mutandis.* Consequently, the secondary anode arrangement 20d is electrically isolated from the secondary cathode arrangement 20c using secondary insulating material 416, for example.

In such an embodiment, the secondary cathode arrangement 20c includes a first secondary cathode 41, which has the shape of a cylindrical shell, the longitudinal direction of which is the same as the longitudinal direction z of the first cathode 21. The longitudinal directions are the same, since during use, the longitudinal direction of the primary cathode arrangement 20a is advantageously vertical, as well as that of the secondary cathode arrangement 20c. Referring to Figure 4b, in an embodiment, this also has other technical benefits. Referring to Figure 4a, the centre axis Ax of the primary cathode arrangement 20a is not necessarily in the same position as the centre axis Ax2 of the secondary cathode arrangement 20c.

Referring further to Figure 4a, the secondary anode arrangement 20d includes (i) a first secondary anode 42, which has the shape of a bar or a cylindrical shell, the first secondary anode 42 thus having the shape of a longitudinal z profile; (ii) a secondary electrically conductive flange 422; (iii) an electrically conductive secondary anode support 421, which is connected to the first secondary anode 42 and the secondary flange 422 and arranged to supply electricity to the first secondary anode 42; and (iv) a secondary connection point 424 for connecting a third electric wire 63 to the secondary flange 422. In the secondary anode arrangement 20d, the secondary flange 422 extends in the transverse direction (x, y) from the first secondary anode 42.

Secondary electrode arrangements 20c, 20d are arranged in such a way that the first secondary cathode 41 encircles said first secondary anode 42 in transverse directions so that a first secondary gap 51 remains between the first secondary anode 42 and the first secondary cathode 41 in said transverse direction for transporting said water. In addition, the secondary flange 422 is mechanically supported to the first secondary cathode 41 in the longitudinal direction z. In addition, the secondary connection point 424 is at least as far from the longitudinal centre axis Ax2 of the secondary cathode arrangement 20c as such a point of the first secondary cathode 41 that is closest to the secondary connection point 424.

In such an arrangement, electrically insulating secondary insulating material 416 is advantageously arranged between the secondary flange 422 and the first secondary cathode 41 in the longitudinal direction z. Hardness of the secondary insulating material 416 is preferably at least 65 Sh(A), more preferably at least 75 Sh(A). The apparatus can additionally include sealing material, such as silicone, which remains between the secondary flange 422 and the first secondary cathode 41 in said longitudinal direction z.

In an embodiment, the first anode 22, or the first anode of the primary anode arrangement 20b, includes primary anode material, which is selected from the group of aluminium (Al), iron (Fe), magnesium (Mg), carbon (C), chromium (Cr), copper (Cu), manganese (Mn), tin (Sn), lead (Pb) and bismuth (Bi). In addition, the first secondary anode 42, or the anode of the secondary anode arrangement 20d, includes secondary anode material, which is selected from the group of aluminium (Al), iron (Fe), magnesium (Mg), carbon (C), chromium (Cr), copper (Cu), manganese (Mn), tin (Sn), lead (Pb) and bismuth (Bi). Furthermore, the primary anode material is a different material than the secondary anode material. Particularly advantageously, the primary anode material includes iron and the second anode material includes aluminium. In addition, the anode arrangements are arranged relative to each other in such a way that the secondary anode arrangement 20d is downstream of the primary anode arrangement 20b, as shown in Figures 4a and 4b.

When a different material is used in the anode arrangement 20b than in the secondary anode arrangement 20d, different voltage is also preferably used in these. On the other hand, the same potential, such as ground potential, is advantageously present in both the cathode arrangement 20a and the secondary cathode arrangement 20c. This is advantageous in terms of user safety. Due to these reasons, the primary anode arrangement 20b is advantageously electrically isolated from the secondary anode arrangement 20d. In Figure 4a, this is realised in a natural way. In Figure 4b, second insulating material 228 is arranged between the flange 222 and the secondary flange 422 in the longitudinal direction z for electrically isolating the primary anode arrangement 20b from the secondary anode arrangement 20d.

Figure 4b illustrates a compact water purifier, in which two different anode materials can be used. In the apparatus according to Figure 4b, the primary anode arrangement 20b extends from the primary flange 222 in the longitudinal direction z towards a first direction -z. During use, the primary flange 222 is thus in the upper part of the primary anode arrangement 20b. In addition, the secondary anode arrangement 20d extends from the secondary flange 422 in the longitudinal direction z towards a second direction +z, which is opposed to the first direction -z. In other words, the first secondary anode 42 extends from the secondary flange 422 in the longitudinal direction z towards the second direction +z. During use, the secondary flange 422 is thus in the lower part of the secondary anode arrangement 20d. In addition, electrode arrangements are centered relative to each other in such a way that the longitudinal centre axis Ax of the primary cathode arrangement 20a is also the longitudinal centre axis Ax2 of the secondary cathode arrangement 20c.

Advantageously, an additive for enhancing floc formation is utilised in water purification. Such an additive can be supplied with equipment 77 suitable for the purpose (Figures 1a, 2a and 3a). The additive is advantageously supplied to water at a point, which is located after the anode or cathode arrangement(s) 20a, 20b (or 20a, 20b, 20c and 20d, if provided) of the apparatus 10, in the flow direction of water.

For this reason, in an embodiment, the apparatus additionally includes equipment 77 for supplying an additive for enhancing floc formation to water at a point, which is located after the cathode electrode arrangement 20a in the flow direction of water. In an embodiment, the apparatus includes a secondary cathode arrangement 20c and additionally equipment 77 for supplying an additive for enhancing floc formation to water at a point, which is located after the secondary cathode electrode arrangement 20c in the flow direction of water. In an embodiment, equipment 77 for supplying an additive for enhancing floc formation is arranged to supply said additive as an aqueous solution or powder. In an embodiment, the additive includes a polymer, such as a water-soluble polymer, such as polyacrylamide, for example, cationic, anionic or neutral polyacrylamide. Dry polyacrylamide can be used as an additive. For example, such an agent is known under the trademark Superfloc^{®}. The charge of polyacrylamide may be cationic, anionic or neutral. The additive is advantageously supplied as an aqueous solution.

Figure 5 is an exploded view of the electrode arrangements of an apparatus. In the bottom left corner of the figure, there is a bottom plate (not numbered), which delimits the distribution chamber for distributing water to the gaps, as described above.

After this, in the longitudinal direction z, there is a primary clamping ring 214b, which can be used to clamp the projection 212 (cathode flange) of the first primary cathode 21 to the flange 222 of the primary anode arrangement 20b.

After this, in the longitudinal direction z, there is the primary cathode arrangement 20a, which includes a first, a second and a third cathode 21, 23, 25. A projection 212, which in this case is a cathode flange, is arranged in the first cathode 21. After this, in the z direction, there is insulation 216 for isolating the primary anode arrangement 20b from the primary cathode arrangement 20a. After this, in the z direction, there is the primary anode arrangement 20b. The primary anode arrangement 20b includes a first and a second anode 22, 24, as well as an anode support 221, a flange 222 and a connection point 224. In addition, a second electric wire 62 is depicted (not necessarily a part of the apparatus 10, if the power source is sold separately). In the figure, the second electric wire 62 is connected to a connection point 224. As shown in the figure, the connection point 224 is substantially farther away from the centre axis 224 than, for example, the projection 212 of the cathode.

When using the apparatus, the anodes 22, 24 of the primary anode arrangement 20b are pushed between the cathodes 21, 23, 25 of the primary cathode arrangement 20a for forming the above-described gaps 31, 32, 33, 34, as illustrated in Figures 3a and 3b, for example.

After this, in the longitudinal direction z, there is an insulating ring made of second insulating material 228 for isolating the primary anode arrangement 20b from the secondary anode arrangement 20d. Advantageously, the second insulating material 228 is also suitably hard. Hardness of the second insulating material 228 can be at least 65 Sh(A), more preferably at least 75 Sh(A). The apparatus 10 can additionally include sealing material, such as silicone, which remains between the primary flange 222 and the secondary flange 422 in the longitudinal direction z.

After this, in the longitudinal direction z, there is the secondary anode arrangement 20d. The secondary anode arrangement 20d includes a first secondary anode 42, a second secondary anode 44, a secondary anode support 421, a secondary flange 424 and a secondary connection point 424. In addition, the figure depicts a third electric wire 63, which can be connected to the secondary connection point 424. As shown in the figure, the secondary connection point 424 is substantially farther away from the centre axis Ax than, for example, the projection 412 of the secondary cathode.

After this, in the longitudinal direction z, there is electrically insulating secondary insulating material 416, which remains between the secondary flange 422 and the first secondary cathode 41. Sealing, such as silicone, can also be present between these, as necessary. Preferable hardness of the secondary insulating material is indicated above.

After this, in the longitudinal direction z, there is the secondary cathode arrangement 20c. The secondary cathode arrangement 20c includes a first, a second and a third secondary cathode (41, 43, 45) and a secondary cathode support 418 (corresponding to the primary cathode support 218, cf. Figure 3a) and a projection 412 for the secondary cathode, such as a secondary cathode flange.

When using the apparatus, the anodes 42, 44 of the secondary anode arrangement 20d are pushed between the cathodes 41, 43, 45 of the secondary cathode arrangement 20c for forming the above-described secondary gaps (inter alia, the first secondary gap 51).

After this, in the longitudinal direction z, there is a secondary clamping ring 414b, which can be used to clamp the projection 412 (cathode flange) of the first secondary cathode 41 to the flange 422 of the secondary anode arrangement 20d.

Furthermore, the figure depicts the cover plate of the apparatus, which forms the collector chamber for receiving purified water from the secondary gaps (51 inter alia) formed by the secondary anode and cathode arrangements (20c, 20d).

The parts of the embodiment according to Figure 5 can be connected to each other with a bolt and a nut, for example, in such a way that the primary clamping ring 214b is clamped to the secondary clamping ring 414b with bolts and nuts, for example, so that the seals and flanges remaining between the clamping rings 214n, 414b are pressed to each other.

If the apparatus includes the primary 20b and the secondary 20d anode arrangements extending in opposing directions, as in Figures 4b and 5, the number of primary gaps 31, 32, 33, 34 is most advantageously equal to that of the secondary gaps (51 inter alia). In the solution according to Figure 4a, the number of primary and secondary gaps can also be the same.

## Claims

1. An apparatus (10) for purifying water, the apparatus (10) including
- a cathode arrangement (20a), which includes
• a first cathode (21) having the shape of a cylindrical shell, thus the first cathode (21) having the shape of a longitudinal (z) profile and
- an anode arrangement (20b), which is electrically isolated from the cathode arrangement (20a), the anode arrangement (20b) including
• a first anode (22) having the shape of a bar or a cylindrical shell, the longitudinal direction of which is the same as the longitudinal direction of the first cathode (21),
• an electrically conductive flange (222),
• an electrically conducting anode support (221), which is connected to the first anode (22) and the flange (222) and arranged to supply electricity to the first anode (22), and
• a connection point (224) for connecting an electric wire (62) to the flange (222), in which apparatus (10)
- the first cathode (21) encircles said first anode (22) in the transverse directions perpendicular to said longitudinal direction (z) in such a way that a first gap (31) remains in the transverse direction between the first anode (21) and the first cathode (21) for transporting water, and
- said flange (222) is mechanically supported to the first cathode (21) in the longitudinal direction (z),
- the first cathode (21) includes cathode material,
- the first anode (22) includes anode material, which is selected from the group of aluminium (Al), iron (Fe), magnesium (Mg), carbon (C), chromium (Cr), copper (Cu), manganese (Mn), tin (Sn), lead (Pb) and bismuth (Bi), **characterised in that**
- said connection point (224) is at least as far from the longitudinal centre axis (AX) of the cathode arrangement (20a) as such a point of the first cathode (21) that is closest to said connection point (224), and
- in the anode arrangement (20b), at least said anode support (221) and the connection point of said anode support (221) and the first anode (22) are coated with a water-insoluble and electrically insulating coating and the first anode (22) is uncoated for their other part.

2. An apparatus (10) according to Claim 1, wherein
- the flange (222) encircles said longitudinal centre axis (AX) and the anode support (221) delimits an opening (226), which forms a flow channel for said water to the first gap (31) or from the first gap (31);
advantageously
- the flange (224) extends from the first anode (22) in said transverse direction for at least 20 mm.

3. An apparatus (10) according to Claim 1 or 2, wherein
- the apparatus (10) includes fastening means (214) for fastening said flange (222) to the first cathode (21);
advantageously
- the first cathode (21) includes a projection (212), such as a cathode flange, which extends away from said centre axis (AX) in said transverse direction, and
- said fastening means (214) are arranged to fasten said flange (222) to said projection (212).

4. An apparatus (10) according to any of Claims 1 to 3, including
- electrically insulating material (216), which remains between the flange (222) and the first cathode (21) in the longitudinal direction (z);
advantageously
- hardness of the insulating material (216) is at least 65 Sh(A), more preferably at least 75 Sh(A);
more advantageously, the apparatus (10) additionally includes
- sealing material, such as silicone, which remains between the flange (222) and the first cathode (21) in the longitudinal direction (z).

5. An apparatus (10) according to any of Claims 1 to 4, wherein
- in the anode arrangement (20b), at least said anode support (221) and the connection point of said anode support (221) and the first anode (22) are coated with lacquer or paint.

6. An apparatus (10) according to any of Claims 1 to 5, wherein
- the anode support (221) and the first anode (22) are made of the same metal, advantageously
- the anode support (221) and the first anode (22) are additionally connected to each other by welding.

7. An apparatus (10) according to any of Claims 1 to 6, wherein
- the cathode material is more electronegative than the anode material;
more advantageously, in addition,
- the cathode material is selected from the group of steel, acid-proof steel, stainless steel and graphite.

8. An apparatus (10) according to any of Claims 1 to 7, wherein
- the first anode (22) has the shape of a cylindrical shell,
- the cathode arrangement (20a) includes
• a second cathode (23) having the shape of a bar or a cylindrical shell, the longitudinal direction of which is the same as the longitudinal direction (z) of the first cathode (21), and
• an electrically conductive cathode support (218), which is arranged to support the second cathode (23) to the first cathode (21) and supply electricity from the first cathode (21) to the second cathode (23), in which apparatus (10)
- the first anode (22) encircles said second cathode (23) in the transverse directions in such a way that a second gap (32) remains in the transverse direction between the second cathode (23) and the first anode (22) for transporting said water; advantageously
- the cathode arrangement (20a) includes a first number (N1) of electrodes (21, 23, 25) penetrating a plane (P) and
- the anode arrangement (20a) includes a second number (N2) of electrodes (22, 24) penetrating said plane (P), in which apparatus (10)
- the first number (N1) is one greater than the second number (N2; N1=N2+1), thus
- the number of gaps (31, 32, 33, 34) penetrating the plane P is even.

9. An apparatus (10) according to Claim 8 for purifying water, wherein
- the anode arrangement (20b) includes
• a second anode (24), which has the shape of a cylindrical shell and is connected to an anode support (221),
- the cathode arrangement (20a) includes
• a third cathode (25), which has the shape of a bar or a cylindrical shell and is connected to a cathode support (218), in which apparatus (10)
- the second cathode (23) encircles the second anode (24) in the transverse directions, a third gap (33) thus existing in the transverse direction between the second cathode (23) and the second anode (24),
- the second anode (24) encircles the third cathode (25) in the transverse directions, a fourth gap (34) thus existing in the transverse direction between the second anode (24) and the third cathode (25).

10. An apparatus (10) according to any of Claims 1 to 9, including
- a secondary cathode arrangement (20c), which includes
• a first secondary cathode (41) having the shape of a cylindrical shell, the longitudinal direction of which is the same as the longitudinal direction (z) of the first cathode (21),
- a secondary anode arrangement (20d), which is electrically isolated from the secondary cathode arrangement (20c), the secondary anode arrangement (20d) including
• a first secondary anode (42) having the shape of a bar or a cylindrical shell, the longitudinal direction of which is the same as the longitudinal direction (z) of the first cathode (21),
• an electrically conductive secondary flange (422),
• an electrically conducting secondary anode support (421), which is connected to the first secondary anode (42) and the secondary flange (422) and arranged to supply electricity to the first secondary anode (42), and
• a secondary connection point (424) for connecting an electric wire (63) to the secondary flange (422), in which apparatus (10)
- the first secondary cathode (41) encircles the first secondary anode (42) in the transverse directions so that a first secondary gap (51) remains between the first secondary anode (42) and the first secondary cathode (41) in said transverse direction for transporting said water,
- the secondary flange (422) is mechanically supported to the first secondary cathode (41) in the longitudinal direction (z),
- electrically insulating secondary insulating material (416) is arranged between the secondary flange (422) and the first secondary cathode (41) and
- the secondary connection point (424) is at least as far from the longitudinal centre axis (Ax2) of the secondary cathode arrangement (20c) as such a point of the first secondary cathode (41) that is closest to said secondary connection point (424).

11. An apparatus (10) according to Claim 10, wherein
- the first secondary anode (42) has the shape of a cylindrical shell,
- the secondary cathode arrangement (20c) includes
• a second secondary cathode (43) having the shape of a bar or a cylindrical shell, the longitudinal direction of which is the same as the longitudinal direction (z) of the first secondary cathode (41), and
• an electrically conductive secondary cathode support (418), which is arranged to support the second secondary cathode (43) to the first secondary cathode (41) and supply electricity from the first secondary cathode (41) to the second secondary cathode (43), in which apparatus (10)
- the first secondary anode (42) encircles said second secondary cathode (43) in the transverse directions in such a way that a second secondary gap remains in the transverse direction between the second secondary cathode (43) and the first secondary anode (42) for transporting said water.

12. An apparatus (10) according to Claim 10 or 11, wherein
- the anode arrangement (20b), ie. the primary anode arrangement (20b), extends from the flange (222) in the longitudinal direction (z) towards a first direction (-z),
- the secondary anode arrangement (20d) extends from the secondary flange (422) in the longitudinal direction (z) towards a second direction (+z) opposed to the first direction (-z) and
- the longitudinal centre axis (Ax) of the cathode arrangement (20a) is also the longitudinal centre axis (Ax2) of the secondary cathode arrangement (20c).

13. An apparatus (10) according to any of Claims 10 to 12, wherein
- the anode arrangement (20b), ie. the primary anode arrangement (20b), is electrically isolated from the secondary anode arrangement (20d),
advantageously, in the apparatus (10),
- the longitudinal centre axis (Ax) of the cathode arrangement (20a) is also the longitudinal centre axis (AX2) of the secondary cathode arrangement (20c), and the apparatus (10) includes
- second insulating material (228) between the flange (222) and the secondary flange (422) in the longitudinal direction (z);
more advantageously
- hardness of the second insulating material (228) is at least 65 Sh(A), more preferably at least 75 Sh(A).

14. An apparatus (10) according to any of Claims 10 to 13, wherein
- the first secondary anode (42) includes secondary anode material, which is selected from the group of aluminium (Al), iron (Fe), magnesium (Mg), carbon (C), chromium (Cr), copper (Cu), manganese (Mn), tin (Sn), lead (Pb) and bismuth (Bi), and
- said anode material is a different material than the secondary anode material; advantageously
- said anode material includes iron and the second anode material includes aluminium.

15. An apparatus (10) according to any of Claims 1 to 14, including
- equipment (77) for supplying an additive for enhancing floc formation to water at a point, which is located after the first anode (22) and the first cathode (21) in the flow direction of water;
advantageously
- the equipment (77) for supplying an additive for enhancing floc formation is arranged to supply said additive as an aqueous solution or powder.

## Patentansprüche

1. Vorrichtung (10) zum Reinigen von Wasser, wobei die Vorrichtung (10) Folgendes umfasst
- eine Kathodenanordnung (20a), die Folgendes umfasst:
• eine erste Kathode (21) mit der Form einer zylindrischen Schale, wobei die erste Kathode (21) die Form eines Längsprofils (z) hat und
- eine Anodenanordnung (20b), die elektrisch von der Kathodenanordnung (20a) isoliert ist, wobei die Anodenanordnung (20b) Folgendes umfasst
• eine erste Anode (22) in Form eines Stabes oder einer zylindrischen Schale, deren Längsrichtung mit der Längsrichtung der ersten Kathode (21) übereinstimmt,
• einen elektrisch leitenden Flansch (222),
• eine elektrisch leitende Anodenhalterung (221), die mit der ersten Anode (22) und dem Flansch (222) verbunden ist und so angeordnet ist, dass sie die erste Anode (22) mit Strom versorgt, und
• einen Anschlusspunkt (224) zum Anschließen eines elektrischen Kabels (62) an den Flansch (222), in welcher Vorrichtung (10)
- die erste Kathode (21) die erste Anode (22) in den Querrichtungen senkrecht zur Längsrichtung (z) umschließt, so dass in der Querrichtung zwischen der ersten Anode (21) und der ersten Kathode (21) ein erster Spalt (31) zum Transport von Wasser verbleibt, und
- der Flansch (222) in Längsrichtung (z) mechanisch an der ersten Kathode (21) abgestützt ist,
- die erste Kathode (21) Kathodenmaterial enthält,
- die erste Anode (22) Anodenmaterial umfasst, das aus der Gruppe von Aluminium (Al), Eisen (Fe), Magnesium (Mg), Kohlenstoff (C), Chrom (Cr), Kupfer (Cu), Mangan (Mn), Zinn (Sn), Blei (Pb) und Wismut (Bi) ausgewählt ist, **dadurch gekennzeichnet, dass**
- dieser Verbindungspunkt (224) von der Längsmittelachse (AX) der Kathodenanordnung (20a) mindestens so weit entfernt wie ein dem Verbindungspunkt (224) am nächsten liegender Punkt der ersten Kathode (21) ist, und
- bei der Anodenanordnung (20b) zumindest der Anodenträger (221) und die Verbindungsstelle zwischen dem Anodenträger (221) und der ersten Anode (22) mit einer wasserunlöslichen, und elektrisch isolierenden Beschichtung überzogen sind und die erste Anode (22) ansonsten unbeschichtet ist.

2. Vorrichtung (10) nach Anspruch 1, wobei
- der Flansch (222) die Längsmittelachse (AX) umschließt und die Anodenhalterung (221) eine Öffnung (226) begrenzt, die einen Strömungskanal für das Wasser zum ersten Spalt (31) oder vom ersten Spalt (31) bildet;
vorteilhafterweise
- sich der Flansch (224) von der ersten Anode (22) in der Querrichtung um mindestens 20 mm erstreckt.

3. Vorrichtung (10) nach Anspruch 1 oder 2, wobei
- die Vorrichtung (10) Befestigungsmittel (214) zum Befestigen des Flansches (222) an der ersten Kathode (21) umfasst;
vorteilhafterweise
- die erste Kathode (21) einen Vorsprung (212) aufweist, wie etwa einen Kathodenflansch, der sich in Querrichtung von der Mittelachse (AX) weg erstreckt, und
- die Befestigungsmittel (214) so angeordnet sind, dass sie den Flansch (222) an dem Vorsprung (212) befestigen.

4. Vorrichtung (10) nach einem der Ansprüche 1 bis 3, umfassend
- elektrisch isolierendes Material (216), das in Längsrichtung (z) zwischen dem Flansch (222) und der ersten Kathode (21) verbleibt;
vorteilhafterweise
- Härte des Isoliermaterials (216) mindestens 65 Sh(A), besser noch mindestens 75 Sh(A) beträgt; vorteilhafterweise die Vorrichtung (10) zusätzlich Folgendes umfasst
- Dichtungsmaterial, wie etwa Silikon, das in Längsrichtung (z) zwischen dem Flansch (222) und der ersten Kathode (21) verbleibt.

5. Vorrichtung (10) nach einem der Ansprüche 1 bis 4, wobei
- in der Anodenanordnung (20b) zumindest der Anodenträger (221) und die Verbindungsstelle des Anodenträgers (221) und der ersten Anode (22) mit Lack oder Farbe beschichtet sind.

6. Vorrichtung (10) nach einem der Ansprüche 1 bis 5, wobei
- der Anodenträger (221) und die erste Anode (22) aus dem gleichen Metall bestehen,
vorteilhafterweise
- der Anodenträger (221) und die erste Anode (22) zusätzlich durch Schweißen miteinander verbunden sind.

7. Vorrichtung (10) nach einem der Ansprüche 1 bis 6, wobei
- das Kathodenmaterial elektronegativer ist als das Anodenmaterial;
vorteilhaftererweise zusätzlich
- das Kathodenmaterial aus der Gruppe von Stahl, säurebeständigem Stahl, rostfreiem Stahl und Graphit ausgewählt ist.

8. Vorrichtung (10) nach einem der Ansprüche 1 bis 7, wobei
- die erste Anode (22) die Form einer zylindrischen Schale hat,
- die Kathodenanordnung (20a) Folgendes umfasst
• eine zweite Kathode (23) in Form eines Stabes oder einer zylindrischen Schale, deren Längsrichtung mit der Längsrichtung (z) der ersten Kathode (21) übereinstimmt, und
• eine elektrisch leitfähige Kathodenhalterung (218), die so angeordnet ist, dass sie die zweite Kathode (23) an der ersten Kathode (21) hält und Elektrizität von der ersten Kathode (21) an die zweite Kathode (23) liefert, in welcher Vorrichtung (10)
- die erste Anode (22) die zweite Kathode (23) in Querrichtung so umschließt, dass in Querrichtung zwischen der zweiten Kathode (23) und der ersten Anode (22) ein zweiter Spalt (32) zum Transport des Wassers verbleibt;
vorteilhafterweise
- die Kathodenanordnung (20a) eine erste Anzahl (N1) von Elektroden (21, 23, 25) umfasst, die eine Ebene (P) durchdringen, und
- die Anodenanordnung (20a) eine zweite Anzahl (N2) von Elektroden (22, 24) umfasst, die die Ebene (P) durchdringen, in welcher Vorrichtung (10)
- die erste Anzahl (N1) um eins größer ist als die zweite Anzahl (N2; N1=N2+1), sodass
- die Anzahl der Lücken (31, 32, 33, 34), die die Ebene P durchdringen, gerade ist.

9. Vorrichtung (10) nach Anspruch 8 zum Reinigen von Wasser, wobei
- die Anodenanordnung (20b) Folgendes umfasst
• eine zweite Anode (24), die die Form einer zylindrischen Schale hat und mit einem Anodenträger (221) verbunden ist,
- die Kathodenanordnung (20a) Folgendes umfasst
• eine dritte Kathode (25), die die Form eines Stabes oder einer zylindrischen Schale hat und mit einem Kathodenträger (218) verbunden ist, in welcher Vorrichtung (10)
- die zweite Kathode (23) die zweite Anode (24) in Querrichtung umschließt, so dass in Querrichtung zwischen der zweiten Kathode (23) und der zweiten Anode (24) ein dritter Spalt (33) besteht,
- die zweite Anode (24) die dritte Kathode (25) in Querrichtung umschließt, so dass in Querrichtung zwischen der zweiten Anode (24) und der dritten Kathode (25) ein vierter Spalt (34) besteht.

10. Vorrichtung (10) nach einem der Ansprüche 1 bis 9, umfassend
- eine Sekundärkathodenanordnung (20c), die Folgendes umfasst
• eine erste Sekundärkathode (41) in Form einer zylindrischen Schale, deren Längsrichtung mit der Längsrichtung (z) der ersten Kathode (21) übereinstimmt,
- eine Sekundäranodenanordnung (20d), die von der Sekundärkathodenanordnung (20c) elektrisch isoliert ist, wobei die Sekundäranodenanordnung (20d) Folgendes umfasst
• eine erste Sekundäranode (42) in Form eines Stabes oder einer zylindrischen Schale, deren Längsrichtung mit der Längsrichtung (z) der ersten Kathode (21) übereinstimmt,
• einen elektrisch leitfähigen Sekundärflansch (422),
• eine elektrisch leitende Sekundäranodenhalterung (421), die mit der ersten Sekundäranode (42) und dem Sekundärflansch (422) verbunden ist und so angeordnet ist, dass sie die erste Sekundäranode (42) mit Strom versorgt, und
• einen Sekundäranschlusspunkt (424) zum Anschließen eines elektrischen Kabels (63) an den Sekundärflansch (422), in welcher Vorrichtung (10)
- die erste Sekundärkathode (41) die erste Sekundäranode (42) in Querrichtung umschließt, so dass zwischen der ersten Sekundäranode (42) und der ersten Sekundärkathode (41) in Querrichtung ein erster Sekundärspalt (51) zum Transport des Wassers verbleibt,
- der Sekundärflansch (422) in Längsrichtung (z) mechanisch an der ersten Sekundärkathode (41) abgestützt ist,
- zwischen dem Sekundärflansch (422) und der ersten Sekundärkathode (41) elektrisch isolierendes Sekundärisoliermaterial (416) angeordnet ist und
- der Sekundäranschlusspunkt (424) von der Längsmittelachse (Ax2) der Sekundärkathodenanordnung (20c) mindestens so weit entfernt wie ein dem Sekundäranschlusspunkt (424) am nächsten liegender Punkt der ersten Sekundärkathode (41) ist.

11. Vorrichtung (10) nach Anspruch 10, wobei
- die erste Sekundäranode (42) die Form einer zylindrischen Schale hat,
- die Sekundärkathodenanordnung (20c) Folgendes umfasst
• eine zweite Sekundärkathode (43) in Form eines Stabes oder einer zylindrischen Schale, deren Längsrichtung mit der Längsrichtung (z) der ersten Sekundärkathode (41) übereinstimmt, und
• eine elektrisch leitfähige Sekundärkathodenhalterung (418), die so angeordnet ist, dass sie die zweite Sekundärkathode (43) an der ersten Sekundärkathode (41) hält und Elektrizität von der ersten Sekundärkathode (41) an die zweite Sekundärkathode (43) liefert, in welcher Vorrichtung (10)
- die erste Sekundäranode (42) die zweite Sekundärkathode (43) in Querrichtung umschließt, so dass in Querrichtung zwischen der zweiten Sekundärkathode (43) und der ersten Sekundäranode (42) ein zweiter Sekundärspalt zum Transport des Wassers verbleibt.

12. Vorrichtung (10) nach Anspruch 10 oder 11, wobei
- sich die Anodenanordnung (20b), d.h. die primäre Anodenanordnung (20b), vom Flansch (222) in Längsrichtung (z) in Richtung einer ersten Richtung (-z) erstreckt,
- sich die sekundäre Anodenanordnung (20d) vom sekundären Flansch (422) in Längsrichtung (z) in Richtung einer zweiten Richtung (+z) erstreckt, die der ersten Richtung (-z) entgegengesetzt ist, und
- die Längsmittelachse (Ax) der Kathodenanordnung (20a) auch die Längsmittelachse (Ax2) der sekundären Kathodenanordnung (20c) ist.

13. Vorrichtung (10) nach einem der Ansprüche 10 bis 12, wobei
- die Anodenanordnung (20b), d.h. die primäre Anodenanordnung (20b), elektrisch von der sekundären Anodenanordnung (20d) isoliert ist,
vorteilhafterweise in der Vorrichtung (10),
- die Längsmittelachse (Ax) der Kathodenanordnung (20a) auch die Längsmittelachse (AX2) der Sekundärkathodenanordnung (20c) ist und die Vorrichtung (10) Folgendes umfasst
- zweites Isoliermaterial (228) zwischen dem Flansch (222) und dem Sekundärflansch (422) in der Längsrichtung (z) ;
vorteilhafter
- die Härte des zweiten Isoliermaterials (228) mindestens 65 Sh(A), noch besser mindestens 75 Sh(A) beträgt.

14. Vorrichtung (10) nach einem der Ansprüche 10 bis 13, wobei
- die erste Sekundäranode (42) Sekundäranodenmaterial umfasst, das aus der Gruppe von Aluminium (Al), Eisen (Fe), Magnesium (Mg), Kohlenstoff (C), Chrom (Cr), Kupfer (Cu), Mangan (Mn), Zinn (Sn), Blei (Pb) und Wismut (Bi) ausgewählt ist, und
- das Anodenmaterial ein anderes Material als das Sekundäranodenmaterial ist;
vorteilhafterweise
- das Anodenmaterial Eisen umfasst und das zweite Anodenmaterial Aluminium umfasst.

15. Vorrichtung (10) nach einem der Ansprüche 1 bis 14, umfassend:
- eine Einrichtung (77) zum Zuführen eines Zusatzstoffs zur Verbesserung der Flockenbildung zu Wasser an einem Punkt, der sich in Fließrichtung des Wassers hinter der ersten Anode (22) und der ersten Kathode (21) befindet;
vorteilhafterweise
- die Einrichtung (77) zum Zuführen eines Zusatzstoffs zur Verbesserung der Flockenbildung so angeordnet ist, dass der Zusatzstoff als wässrige Lösung oder Pulver zugeführt wird.

## Revendications

1. Appareil (10) pour une purification de l'eau, l'appareil (10) comportant
- un agencement cathodique (20a), qui comporte
• une première cathode (21) ayant la forme d'une coque cylindrique, donc la première cathode (21) ayant la forme d'un profil longitudinal (z) et
• un agencement anodique (20b), qui est électriquement isolé de l'agencement cathodique (20a), l'agencement anodique (20b) comportant
• une première anode (22) ayant la forme d'un barreau ou d'une coque cylindrique dont la direction longitudinale est la même que la direction longitudinale de la première cathode (21),
• une bride électriquement conductrice (222),
• un support anodique électriquement conducteur (221), qui est connecté à la première anode (22) et à la bride (222) et agencé pour fournir de l'électricité à la première anode (22), et
• un point de connexion (224) pour connecter un fil électrique (62) à la bride (222), dans lequel appareil (10)
- la première cathode (21) entoure ladite première anode (22) dans les directions transversales perpendiculaires à ladite direction longitudinale (z) de telle sorte qu'un premier espace (31) subsiste dans la direction transversale entre la première anode (21) et la première cathode (21) pour transporter de l'eau, et
- ladite bride (222) est supportée mécaniquement sur la première cathode (21) dans la direction longitudinale (z) ,
- la première cathode (21) comporte un matériau cathodique,
- la première anode (22) comporte un matériau anodique choisi dans le groupe constitué de l'aluminium (Al), du fer (Fe), du magnésium (Mg), du carbone (C), du chrome (Cr), du cuivre (Cu), du manganèse (Mn), de l'étain (Sn), du plomb (Pb) et du bismuth (Bi), **caractérisé en ce que**
- ledit point de connexion (224) est au moins aussi éloigné de l'axe central longitudinal (AX) de l'agencement cathodique (20a) qu'un tel point de la première cathode (21) qui est le plus proche dudit point de connexion (224), et
- dans l'agencement anodique (20b), au moins ledit support anodique (221) et le point de connexion dudit support anodique (221) et de la première anode (22) sont recouverts d'un revêtement insoluble dans l'eau et électriquement isolant et la première anode (22) est sans revêtement pour son autre partie.

2. Appareil (10) selon la revendication 1, dans lequel
- la bride (222) entoure ledit axe central longitudinal (AX) et le support anodique (221) délimite une ouverture (226), qui forme un canal d'écoulement pour ladite eau vers le premier espace (31) ou depuis le premier espace (31) ;
avantageusement
- la bride (224) s'étend à partir de la première anode (22) dans ladite direction transversale sur au moins 20 mm.

3. Appareil (10) selon la revendication 1 ou 2, dans lequel
- l'appareil (10) comporte des moyens de fixation (214) pour fixer ladite bride (222) à la première cathode (21) ; avantageusement
- la première cathode (21) comporte une saillie (212), telle qu'une bride de cathode, qui s'étend à l'opposé dudit axe central (AX) dans ladite direction transversale, et
- lesdits moyens de fixation (214) sont agencés pour fixer ladite bride (222) à ladite saillie (212).

4. Appareil (10) selon l'une quelconque des revendications 1 à 3, comportant
- un matériau électriquement isolant (216), qui subsiste entre la bride (222) et la première cathode (21) dans la direction longitudinale (z) ;
avantageusement
- la dureté du matériau isolant (216) est d'au moins 65 Sh(A), de préférence d'au moins 75 Sh(A) ;
plus avantageusement, l'appareil (10) comporte en outre
- un matériau d'étanchéité, tel que du silicone, qui reste entre la bride (222) et la première cathode (21) dans la direction longitudinale (z).

5. Appareil (10) selon l'une quelconque des revendications 1 à 4, dans lequel
- dans l'agencement anodique (20b), au moins ledit support anodique (221) et le point de connexion dudit support anodique (221) et de la première anode (22) sont recouverts de laque ou de peinture.

6. Appareil (10) selon l'une quelconque des revendications 1 à 5, dans lequel
- le support anodique (221) et la première anode (22) sont réalisés dans le même métal,
avantageusement
- le support anodique (221) et la première anode (22) sont en outre reliés l'un à l'autre par soudage.

7. Appareil (10) selon l'une quelconque des revendications 1 à 6, dans lequel
- le matériau cathodique est plus électronégatif que le matériau anodique ;
plus avantageusement, en outre,
- le matériau cathodique est sélectionné dans le groupe de l'acier, de l'acier résistant aux acides, de l'acier inoxydable et du graphite.

8. Appareil (10) selon l'une quelconque des revendications 1 à 7, dans lequel
- la première anode (22) a la forme d'une coque cylindrique,
- l'agencement cathodique (20a) comporte
• une deuxième cathode (23) ayant la forme d'une barre ou d'une coque cylindrique, dont la direction longitudinale est la même que la direction longitudinale (z) de la première cathode (21), et
• un support cathodique électriquement conducteur (218), qui est agencé pour supporter la deuxième cathode (23) jusqu'à la première cathode (21) et fournir de l'électricité depuis la première cathode (21) jusqu'à la deuxième cathode (23), dans lequel appareil (10)
- la première anode (22) entoure ladite deuxième cathode (23) dans les directions transversales de telle sorte qu'un deuxième espace (32) reste dans la direction transversale entre la deuxième cathode (23) et la première anode (22) pour transporter ladite eau ; avantageusement
- l'agencement cathodique (20a) comporte un premier nombre (N1) d'électrodes (21, 23, 25) pénétrant dans une paroi (P) et
- l'agencement anodique (20a) comporte un second nombre (N2) d'électrodes (22, 24) pénétrant dans ladite paroi (P), dans lequel appareil (10)
- le premier nombre (N1) est supérieur d'une unité au second nombre (N2 ; N1=N2+1), donc
- le nombre d'espaces (31, 32, 33, 34) pénétrant dans la pièce P est pair.

9. Appareil (10) selon la revendication 8 pour purifier l'eau, dans lequel
- l'agencement anodique (20b) comporte
• une seconde anode (24), qui a la forme d'une coque cylindrique et est reliée à un support anodique (221),
- l'agencement cathodique (20a) comporte
• une troisième cathode (25), qui a la forme d'une barre ou d'une coque cylindrique et est reliée à un support anodique (218), dans lequel appareil (10)
- la deuxième cathode (23) entoure la seconde anode (24) dans les directions transversales, un troisième espace (33) existant ainsi dans la direction transversale entre la deuxième cathode (23) et la seconde anode (24),
- la seconde anode (24) entoure la troisième cathode (25) dans les directions transversales, un quatrième espace (34) existant ainsi dans la direction transversale entre la seconde anode (24) et la troisième cathode (25).

10. Appareil (10) selon l'une quelconque des revendications 1 à 9, comportant
- un agencement de cathode secondaire (20c), qui comporte
• une première cathode secondaire (41) ayant la forme d'une coque cylindrique dont la direction longitudinale est la même que la direction longitudinale (z) de la première cathode (21),
• un agencement anodique secondaire (20d), qui est électriquement isolé de l'agencement cathodique secondaire (20c), l'agencement anodique secondaire (20d) comportant
• une première anode secondaire (42) ayant la forme d'un barreau ou d'une coque cylindrique dont la direction longitudinale est la même que la direction longitudinale (z) de la première cathode (21),
• une bride secondaire électriquement conductrice (422),
• un support anodique secondaire électriquement conducteur (421), qui est connecté à la première anode secondaire (42) et à la bride secondaire (422) et agencé pour fournir de l'électricité à la première anode secondaire (42), et
• un point de connexion secondaire (424) pour connecter un fil électrique (63) à la bride secondaire (422), dans lequel appareil (10)
- la première cathode secondaire (41) entoure la première anode secondaire (42) dans les directions transversales de sorte qu'un premier espace secondaire (51) subsiste entre la première anode secondaire (42) et la première cathode secondaire (41) dans ladite direction transversale pour transporter ladite eau,
- la bride secondaire (422) est supportée mécaniquement sur la première cathode secondaire (41) dans la direction longitudinale (z),
- un matériau isolant secondaire électriquement isolant (416) est agencé entre la bride secondaire (422) et la première cathode secondaire (41) et
- le point de connexion secondaire (424) est au moins aussi éloigné de l'axe central longitudinal (Ax2) de l'agencement de cathodique secondaire (20c) qu'un point de la première cathode secondaire (41) qui est le plus proche dudit point de connexion secondaire (424).

11. Appareil (10) selon la revendication 10, dans lequel
- la première anode secondaire (42) a la forme d'une coque cylindrique,
- l'agencement cathodique secondaire (20c) comporte
• une deuxième cathode secondaire (43) ayant la forme d'une barre ou d'une coque cylindrique dont la direction longitudinale est la même que la direction longitudinale (z) de la première cathode secondaire (41), et
• un support cathodique secondaire électriquement conducteur (418), qui est agencé pour supporter la deuxième cathode secondaire (43) jusqu'à la première cathode secondaire (41) et fournir de l'électricité depuis la première cathode secondaire (41) jusqu'à la deuxième cathode secondaire (43), dans lequel appareil (10)
- la première anode secondaire (42) entoure ladite deuxième cathode secondaire (43) dans les directions transversales de telle sorte qu'un deuxième espace secondaire subsiste dans la direction transversale entre la deuxième cathode secondaire (43) et la première anode secondaire (42) pour transporter ladite eau.

12. Appareil (10) selon la revendication 10 ou 11, dans lequel
- l'agencement anodique (20b), c'est-à-dire. l'agencement anodique primaire (20b) s'étend depuis la bride (222) dans la direction longitudinale (z) vers une première direction (-z),
- l'agencement anodique secondaire (20d) s'étend depuis la bride secondaire (422) dans la direction longitudinale (z) vers une seconde direction (+z) opposée à la première direction (-z) et
- l'axe central longitudinal (Ax) de l'agencement cathodique (20a) est également l'axe central longitudinal (Ax2) de l'agencement cathodique secondaire (20c).

13. Appareil (10) selon l'une quelconque des revendications 10 à 12, dans lequel
- l'agencement anodique (20b), c'est-à-dire. l'agencement anodique primaire (20b), est électriquement isolé de l'agencement anodique secondaire (20d), avantageusement, dans l'appareil (10),
- l'axe central longitudinal (Ax) de l'agencement cathodique (20a) est également l'axe central longitudinal (AX2) de l'agencement cathodique secondaire (20c), et l'appareil (10) comporte
- un second matériau isolant (228) entre la bride (222) et la bride secondaire (422) dans la direction longitudinale (z) ;
plus avantageusement
- la dureté du second matériau isolant (228) est d'au moins 65 Sh(A), de préférence d'au moins 75 Sh(A).

14. Appareil (10) selon l'une quelconque des revendications 10 à 13, dans lequel
- la première anode secondaire (42) comporte un matériau anodique secondaire, qui est choisi dans le groupe constitué de l'aluminium (Al), du fer (Fe), du magnésium (Mg), du carbone (C), du chrome (Cr), du cuivre (Cu), du manganèse (Mn), de l'étain (Sn), du plomb (Pb) et du bismuth (Bi), et
- ledit matériau d'anode est un matériau différent du matériau d'anode secondaire ; avantageusement
- ledit matériau d'anode comporte du fer et le second matériau d'anode comporte de l'aluminium.

15. Appareil (10) selon l'une quelconque des revendications 1 à 14, comportant
- un équipement (77) pour fournir un additif pour améliorer la formation de floculation à l'eau en un point situé après la première anode (22) et la première cathode (21) dans la direction d'écoulement de l'eau ;
avantageusement
- l'équipement (77) pour fournir un additif destiné à améliorer la formation de floculation est agencé pour fournir ledit additif sous la forme d'une solution aqueuse ou d'une poudre.
